# EUROPEAN PATENT APPLICATION

(11) **EP 1 665 941 A1**
(43) Date of publication of application: **07.06.2006**
(21) Application number: 04772259.0
(22) Date of filing: 26.08.2004
(51) Int. Cl.: A23L 3/349, A23L 3/3589, A23L 3/00, B65D 81/28

(54) **TOOL FOR RETAINING FRESHNESS**

(30) Priority: 08.09.2003 JP 2003354322
(71) Applicant: Fretek Co., Ltd., Tokyo 1040032 (JP)
(72) Inventor: URANAKA, Ushio;, Tokyo 1040032; (JP); FUJITA, Kazuhisa;, Tokyo 1040032; (JP)
(74) Representative: Hartz, Nikolai
(86) International application number: PCT/JP2004/012303
(87) International publication number: WO 2005/025339

(57) **Abstract**

A freshness-keeping device comprising an adsorbent absorbed with a freshness-keeping liquid, and a film cover made of a material having a high impermeability to gas of the freshness-keeping liquid, which has larger dimensions than the adsorbent to cover the adsorbent from the outside, wherein the cover has a skirt portion extending in a lateral direction of the adsorbent and a dispersing opening is formed at the skirt portion to permit the freshness-keeping liquid to gradually disperse outwardly from the adsorbent, wherein a layer having a function of adsorbing and diffusing a liquid adhered to the surface of the film into the inside, is provided on both or one of the surfaces in contact with the adsorbent, of the upper and lower films constituting the skirt portions.

## Description

### TECHNICAL FIELD

The present invention relates to a freshness-keeping device used preferably for preserving food such as, for example, fresh food, cakes or the like for a long period of time to keep the freshness.

### BACKGROUND ART

Generally, a freshness-keeping device is used to keep the freshness of food or other material to be preserved (for example, decorations for food such as bamboo leaves, persimmon leaves or the like, leather articles, articles made of wood or bamboo, articles made of grass or straw or the like). Such freshness-keeping device is known in, for example, JP-A-9-140363 and so on.

Such freshness-keeping device by conventional techniques is produced by, for example, impregnating a volatile freshness-keeping liquid including ethyl alcohol or the like as the main component into an adsorbent, and the adsorbent is formed by using natural pulp or the like in a form of rectangular flat plate-like shape or a small round rod-like piece. For example, an adsorbent formed as a rectangular flat plate of 50 mm long, 30 mm wide and 2 mm thick, is covered at its upper and lower surfaces with a resinous film having a high impermeability to gas, and the freshness-keeping liquid held inside is gradually dispersed to the outside from only side surface portions of front and back directions and left and right directions.

Further, in an adsorbent of, for example, a round rod-like shape of 10 mm in diameter and 70 mm long, outer peripheral surfaces of the adsorbent are covered over the entire length with a resinous film having a high impermeability to gas, and a freshness-keeping liquid held inside is gradually dispersed outside from end portions at both ends in a direction of the length. In this case, the resinous film has a porous structure and such a treatment that the freshness-keeping liquid is gradually dispersed from the outer peripheral surfaces of the adsorbent, is conducted.

Such freshness-keeping device is used by putting it in a food packing body for a material such as fresh food, cakes or the like, and the freshness-keeping liquid in the adsorbent disperses gradually in the food packing body. Accordingly, the freshness-keeping device fills the space (head space) in the food packing body with a gaseous atmosphere for keeping the freshness, and the gas is adsorbed in a surface side of the food to thereby suppress an increase of bacterium such as mold.

Further, Japanese Patents No. 3159691 (JP-A-2001-190258) points out a problem that when such a freshness-keeping device is put in a food packing body, a side surface and so on of the adsorbent of the freshness-keeping device in the food packing body may directly contact the food in the packing body whereby the freshness-keeping liquid in the adsorbent may be absorbed in the food in an early stage. Thus, there are problems that the service life of the freshness-keeping device decreases and discoloration of the food is caused to reduce the article value. In order to prevent the adsorbent from directly contacting e.g. a food, the patent proposes a freshness-keeping device which comprises an adsorbent absorbed with a volatile freshness-keeping liquid and a film cover made of a material having a high impermeability to gas of the freshness-keeping liquid, which has lager dimensions than each adsorbent to cover the adsorbent from the outside, wherein the cover comprises one or two films each having an outer periphery as the skirt portion extending in the lateral direction of the adsorbent in a state of sandwiching the adsorbent from its upper and lower surfaces, wherein the film or films secure the adsorbent by bonding the upper and lower surfaces of the adsorbent in the state of sandwiching the adsorbent, and the skirt portions extend to an outer side of the adsorbent to provide a dispersing opening allowing the freshness-keeping liquid to disperse gradually from the adsorbent to the outside, by being separated in upper and lower directions.

### DISCLOSURE OF THE INVENTION

### PROBLEMS TO BE SOLVED BY THE INVENTION

In the freshness-keeping device proposed by the Japanese Patent No. 3159691, when the freshness-keeping liquid is dispersed through an opening between skirt portions separated in upper and lower directions, the freshness-keeping liquid condenses into a liquid and adheres to the inner surfaces of the films of the skirt portions, and the films of the skirt portions separated come in contact partially with each other via the condensed liquid in some cases. This contact results in narrowing of the opening of skirt portions, and causes delay of dispersion of the freshness-keeping liquid, whereby there has been a problem that a predetermined freshness-keeping effect cannot be obtained or the effect varies among freshness-keeping devices.

The present invention has been made considering the above problems of prior arts, and it is an object of the present invention to provide a freshness-keeping device capable of stably dispersing a freshness-keeping liquid without delaying a previously expected dispersion of the freshness-keeping liquid suitable for e.g. the type of food or the form of package.

### MEANS FOR SOLVING THE PROBLEMS

To solve the above-mentioned problems, the present invention provides a freshness-keeping device for keeping the freshness of food or other material to be preserved, which comprises an adsorbent adsorbed with a volatile freshness-keeping liquid and a film cover made of a material having a high impermeability to gas of the freshness-keeping liquid, which has larger dimensions than the adsorbent to cover the adsorbent from the outside, wherein the cover has a skirt portion extending in a lateral direction of the adsorbent and a dispersing opening is formed at the skirt portion to permit the freshness-keeping liquid to gradually disperse outwardly from the adsorbent, and the cover comprises a film having an outer perphery extending in a lateral direction of the adsorbent in a state of sandwiching the adsorbent from upper and lower faces, wherein both or one of the faces in contact with the adsorbent, of the film sandwiching the adsorbent from upper and lower faces, is provided with a layer having a function of adsorbing and diffusing a liquid adhered to the surface, so as to promote and stabilize dispersion rate of the freshness-keeping liquid dispersing outwardly.

By thus providing a layer having also a function of absorbing and diffusing an adhered liquid, even if a freshness-keeping liquid being dispersed through an opening between upper and lower skirt portions is condensed into a liquid and adhered to inner surfaces of films, the condensed liquid is immediately adsorbed and diffused into the layer, whereby it is possible to prevent a phenomenon that films of upper and lower skirt portions contact each other to narrow the opening between the skirt portions, it is possible to keep the sizes of the opening between skirt portions as previously set suitably for the type of food to be packed and the form of package, and it is possible to obtain a predetermined dispersion amount of the freshness-keeping liquid.

Further, such a condensation of freshness-keeping liquid on skirt portions is influenced by slight variation of surface conditions of films or the temperature, and the size of opening is slightly changed by these factors, which result in variation of dispersion amount among freshness-keeping devices. However, by immediately adsorbing and diffusing the liquid condensed on the film surface, into the inside of the film, variation of dispersion amount can be reduced.

It is preferred that in the adsorbent has a polygonal flat sheet-like shape; the film has a shape corresponding to the shape of the adsorbent in which a plurality of corner portions are formed in the skirt portions, and a plurality of bond portions are formed in the upper and lower skirt portions of the film for securing the adsorbent in the film by bonding only every corner portions of the skirt portions, and the dispersing opening is constituted by a non-bond portion present between the bond portions of the skirt portions of the film separating in upper and lower directions.

By such a construction, it is possible to secure the adsorbent as it is sandwiched in the film by these bonded portions, and it is possible to hold the adsorbent in a position inside from the skirt portions of the film. Further, since each of non-bonded portions present between a plurality of bonded portions of the skirt portions of the films, forms a dispersing opening, it is possible to disperse a freshness-keeping liquid in the adsorbent gradually to the outside through these openings for dispersion, whereby it is satisfactorily prevent the adsorbent from directly contacting e.g. a food.

It is preferred that the layer having a function of adsorbing and diffusing a liquid adhered to the surface, is a layer having a plurality of air-cells or holes that are not independent from each other.

It is preferred that the layer having a function of adsorbing and diffusing a liquid adhered to the surface, comprises a non-woven fabric or a porous film.

### EFFECTS OF THE INVENTION

As described above, according to the present invention, since even if a freshness-keeping liquid being dispersed is condensed into a liquid and adhered to skirt portions of a film, the condensed liquid is immediately diffused into the inside of the film and the dispersing opening is not changed by the adhesion of the condensed liquid, whereby, it is possible to stably maintain freshness of e.g. a food for a long time without deteriorating the article value, and to minimize deterioration of appearance quality due to discoloration of an adsorbent, and to increase the article value.

### BRIEF DESCRIPTION OF THE DRAWINGS

Fig. 1: A front view showing the freshness-keeping device according to a first embodiment of the present invention.
Fig. 2: An enlarged cross-sectional view of the freshness-keeping device viewed from a direction of arrow marks II-II in Fig. 1.
Fig. 3: An enlarged perspective view of the freshness-keeping device in Fig. 1.
Fig. 4: A perspective view showing a state of using the freshness-keeping device put in a food packing body.
Fig. 5: A perspective view showing the freshness-keeping device according to a second embodiment.
Fig. 6: A front view showing the freshness-keeping device according to a third embodiment.
Fig. 7A: An enlarged cross-sectional view of the freshness-keeping device viewed from a direction of arrow marks VII-VII in Fig. 6.
Fig. 7B: An enlarged view of the film of Fig. 7A.
Fig. 8: An enlarged cross-sectional view of the freshness-keeping device viewed from a direction of arrow marks VIII-VIII in Fig. 6.
Fig. 9: An enlarged cross-sectional view of the freshness-keeping device according to a first modified embodiment.
Fig. 10: An enlarged cross-sectional view of the freshness-keeping device according to a second modified embodiment.

### BEST MODE FOR CARRYING OUT THE INVENTION

In the following, the freshness-keeping device according to embodiments of the present invention will be described in detail with reference to the attached drawings by exemplifying a case that the device is used for preserving food.

Figs. 1 to 4 show the first embodiment of the present invention. In Figs., numeral 1 designates a freshness-keeping device employed in this embodiment wherein the freshness-keeping device 1 comprises an adsorbent 2 which is described later and a cover 3 and so on. The cover 3 is composed of films 4, 4, described later, which cover the adsorbent 2 from both upper and lower surface sides.

Numeral 2 designates the adsorbent disposed between the films 4. The adsorbent 2 is formed in a polygonal frat-plate like shape such as a rectangular flat-plate like shape by using a material of woven cloth, non-woven cloth or the like made of, for example, natural virgin pulp or polyolefin or the like subjected to adsorption/water absorption processes, and has a length of about 30-90 mm, a width of about 15-55 mm and a thickness T, as shown in Fig. 2, of about 1-2 mm, for example.

In the adsorbent 2, a volatile freshness-keeping liquid containing, for example, ethyl alcohol or the like as the main component is impregnated, and the freshness-keeping liquid is gradually dispersed from sides of side surfaces 2A of the adsorbent 2 to the outside through dispersing openings 9 which are described hereinafter.

The freshness-keeping liquid used as an example is, in terms its components, a mixture having a volume ratio of the freshness-keeping liquid B shown in Table 2 to the freshness-keeping liquid A shown in Table 1 of B/A=(0.3/100)-(0.5/100).

**TABLE 1**

| Freshness-keeping liquid A | Modified ethyl alcohol | Lactic acid acid | Purified water water |
|---|---|---|---|
| Weight ratio | 56-58% 56-58% | 0.02-0.03% | Residual |

**TABLE 2**

| | |
|---|---|
| Freshness-keeping liquid B | Citrus series perfume |

In the freshness-keeping liquid A, fatty acid or the like having an antibacterial effect can be used instead of or together with the lactic acid.

Numeral 3 designates the film cover covering the adsorbent 2 from the outside. The cover 3 comprises two films 4, 4 interposing the adsorbent 2 from upper and lower sides in a sandwich form, and each of the films 4 is bonded to upper and lower surfaces of the adsorbent 2 at each bond area 7 which is described hereinafter.

Each of the films 4 is a thin sheet of rectangular shape having larger dimensions than the adsorbent 2, and its outer peripheral side is extended as a skirt portion 4A laterally from the adsorbent 2. The extension dimension L of the skirt portion 4A is about 4-6 mm, for example, which is larger in dimension than the thickness T of the adsorbent 2 (L>T).

In this case, the extension dimension L of the skirt portion 4A may have a dimension equal to the thickness T of the adsorbent 2 (L=T), or it is possible that the extension dimension L is smaller than the thickness T of the adsorbent 2 (L<T). However, when the extension dimension L of the skirt portion 4A is equal to the thickness T of the adsorbent 2 (L=T) or is smaller than that (L<T), there is apt to occur a possibility that the side surfaces 2A of the adsorbent 2 contact directly food or the like put in together.

Here, each film 4 has a four-layer structure comprising a film layer of high gas barrier properties 5 having a high impermeability to gas, which is formed by using, for example, a biaxially oriented polypropylene film (OPP film) or the like, a coating layer 6 using a special resin, a film printing layer (not shown) formed between the coating layer 6 and the film layer 5, and a layer 8 present more inside made of a non-woven fabric or a porous film and having a function of adsorbing and diffusing a liquid adhered to the surface, wherein the coating layer 6 serves as an ink protecting layer for the film printing layer.

The layer 8 having a function of adsorbing and diffusing a liquid, has such a function that when the freshness-keeping liquid being dispersed through an opening between the skirt portions is condensed inside of the skirt portions to be a liquid under some e.g. temperature conditions, the layer 8 adsorbs and diffuses the condensed liquid into the layer and thus prevents upper and lower skirt portions from contacting each other via the liquid. In Fig. 2, layer 8 is provided on both inner surfaces of the upper and lower films sandwiching the adsorbent. However, the construction may be such that layer 8 is provided on one of these inner surfaces.

The film printing layer indicates thereon by printing, for example, a tradename, a ratio of components of the composition, a notice for use and so on by using an edible ink or a non-toxic ink. For this, the film layer 5 is composed of a resinous material having transparency. On the other hand, the coating layer 6 has function of preventing the biting-off or decomposition by mastication if the adsorbent 2 is eaten erroneously. Further, the coating layer 6 is impregnated with perfume or the like for food, and it has a function to gradually disperse the perfume outside.

The film 4 has the overall thickness t which is relatively thick, for example, a thickness of about 30-70 µm to thereby provide a certain degree of rigidity to the skirt portion 4A at an outer periphery side, whereby upper and lower skirt portions 4A, 4A are prevented, to a certain extend, from contacting to each other due to water drops or moisture or the like, for example.

As the material for the film layer 5 and the coating layer 6 constituting the films 4, a resinous film such as polypropylene other than the biaxially oriented polypropylene, polyvinylidene chloride, polyvinyl alcohol, polyacrylonitrile, polyester, polyethylene, stretched nylon or the like may be used.

The layer 8 having a function of adsorbing and diffusing, is a layer having a plurality of air-cells or holes that are not independent from each other, and such a layer may, for example, be a non-woven fabric of polypropylene type or polyester type or a continuous cell film of polyethylene type or fluorine type, namely, a porous film having a plurality of air-cells or holes that are not independent from each other.

Numerals 7 designate the bond areas for fixing each of the films 4 on an upper or lower surface of the adsorbent 2, and each of the bond areas 7 is formed to extend over the entire surface area of an upper or lower surface of the adsorbent 2. For boding means, means such as pasting, thermocompression bonding and so on which are safe to food are used.

Numerals 9 designate the dispersing openings formed between skirt portions 4A of the films 4. The dispersing openings 9 are formed between the skirt portions 4A which are extended laterally from the adsorbent 2 and are apart from each other in upper and lower directions so that front, rear, left and right side surfaces 2A of the adsorbent 2 are communicated with outer air as shown in Fig. 3. Further, the dispersion openings 9 disperse the freshness-keeping liquid impregnated in the adsorbent 2 outside from each side surface 2A.

The freshness-keeping device 1 according to this embodiment has the above-mentioned construction. In the next, freshness-keeping operations of it will be described.

In a case that food 10 such as sandwich or the like is to be preserved by sealing it in a food packing body 11 made of a transparent resinous bag, the freshness-keeping device 1 is previously put in the food packing body 11 as shown in Fig. 4.

The freshness-keeping liquid impregnated in the adsorbent 2 of the freshness-keeping device 1 gradually disperses in the food packing body 11 whereby the space (head space) in the food packing body 11 is filled with a gaseous atmosphere for keeping the freshness. Further, a part of volatile gas is adsorbed into a front layer side of the food 10. By such, the freshness of the food 10 in the food packing body 11 can be maintained for a long period of time, and an increase of bacterium such as mold for example can be suppressed.

In a case of using the freshness-keeping device 1 in the food packing body 11, there is a possibility that the freshness-keeping liquid in the adsorbent 2 is absorbed into the food 10 in an early stage by the direct contact of a side surface 2A of the adsorbent 2 with the food 10 in the packing body 11, whereby the service life of the freshness-keeping device 1 may decrease.

In this embodiment, the adsorbent 2 is sandwiched from upper and lower directions by using the two films 4, 4; the films 4, 4 are bonded to the upper and lower surfaces of the adsorbent 2, and at the same time, the skirt portions 4A are provided at an outer peripheral side of each of the films 4 to extend laterally from the adsorbent 2, wherein the dispersing openings 9 are formed between the skirt portions 4A to permit the fresh-keeping liquid to disperse from each side surfaces 2A of the adsorbent 2.

With this, the freshness-keeping liquid can gradually be dispersed from the side of the side surfaces 2A of the adsorbent 2 interposed between the films 4, 4 through the dispersing openings 9 between the skirt portions 4A to the head space in the food packing body 11, thus, the inside of the food packing body 11 can be filled with a gaseous atmosphere for keeping the freshness.

Further, since the skirt portion 4A of each of the films 4 extends outwardly from the upper or lower surface of the adsorbent 2, the skirt portion 4 can prevent the side surfaces 2A of the adsorbent 2 from contacting directly the food 10 even when the freshness-keeping device 1 contacts the food 10 in the food packing body 11, and in this case, only the skirt portions 4A of the films 4 contact the food 10, as shown in Fig. 4.

In particular, the extension dimension L of the skirt portions 4A is formed to have a larger dimension than the thickness T of the adsorbent 2 (L>T) as shown in Fig. 2. Accordingly, even when the edge of the skirt portions 4A contacts the food 10 and the edge is bent, the side surface 2A of the adsorbent 2 can be covered by the skirt portions 4A, whereby it is possible to prevent certainly the side surfaces 2A of the adsorbent 2 from contacting directly the food 10.

Accordingly, such a disadvantage that the freshness-keeping liquid in the adsorbent 2 is absorbed into the food 10 can be eliminated whereby the adsorption of the freshness-keeping liquid in the adsorbent 2 is preferably kept, and the gradually dispersing properties of the adsorbent 2 wherein the freshness-keeping liquid gradually disperses from the adsorbent 2, can be assured. Further, reduction in the article value due to the discoloration of the food 10 can be prevented.

Further, even in a case that the food 10 is western cakes containing much amount of fats and oils, such a disadvantage that the fats and oils in the food 10 are absorbed from the side surfaces 2A of the adsorbent 2 can be eliminated because a part of the food 10 never contacts directly the adsorbent 2 in the freshness-keeping device 1. With this, it is possible to prevent discoloration of the adsorbent 2 in the freshness-keeping device 1 due to the fats and oils in the food 10, and it is possible to keep preferably the outer appearance for a long period of time.

In this embodiment, accordingly, the direct contact of the adsorbent 2 in the freshness-keeping device 1 to the food 10 or the like can be prevented, and the service life of the freshness-keeping device 1 can be prolonged, and at the same time, the freshness of the food 10 can be kept stably for a long period of time without decreasing the article value. Further, the freshness-keeping device 1 performs such effect that the discoloration or the like of the adsorbent 2 can be suppressed and the quality of outer appearance of the freshness-keeping device 1 can be maintained to increase the article value.

Fig. 5 shows a second embodiment of the present invention wherein the same reference numerals are applied to the same constituting elements as in the first embodiment, and description of these elements is omitted. The feature of this embodiment resides in that a bond area 21 for bonding the adsorbent 2 to the films 4 is formed to have a generally rectangular frame-like shape extending along circumferential sides of the adsorbent 2.

Here, the two films 4, 4 are respectively bonded to upper and lower surfaces of the adsorbent 2 in the bond area 21 by using means such as pasting, thermocompression bonding or the like which is safe to the food in the same manner as in the first embodiment. In this embodiment, however, an outer side portion of a rectangular frame-like line 22 indicated by a two-dotted chain line is the bond area 21 and an inner side portion of the frame line 22 is a non-bond area.

Thus, even in this embodiment having such structure, substantially the same function and effect as in the first embodiment can be obtained. In particular, however, in this embodiment, bonding operations for bonding the films 4 to the adsorbent 2 can effectively be conducted.

Figs. 6 to 8 show a third embodiment of the present invention. The feature of this embodiment resides in that the cover covering the adsorbent from outside is comprised of two films having a rectangular shape; bond areas for bonding the films to each other are formed at corner portions of each of the films, and the adsorbent is held in a state incapable of drawing between the films by the presence of the bonding areas.

In these figures, reference numeral 31 designates a freshness-keeping device employed in this embodiment wherein the freshness-keeping device 31 comprises generally an adsorbent 32 described hereinafter and a cover 34 for covering the adsorbent 32 from outside, which will be described hereinafter.

Numeral 32 designates the adsorbent disposed in the cover 34 wherein the adsorbent 32 has substantially the same construction as the adsorbent 2 described in the first embodiment and the volatile freshness-keeping liquid is impregnated therein. However, covering layers 33, 33 are provided on upper and lower faces of the adsorbent 32 as shown in Fig. 7, and each of the covering layers 33 is constituted by the resinous film of three-layer structure formed by omitting the layer 8 having a function of adsorbing and diffusing a liquid, from the film 4 described in the first embodiment.

The covering layers 33, 33 have dimensions corresponding to the adsorbent 32 and cover the upper and lower surfaces of the adsorbent 32 whereby the upper and lower surfaces of the adsorbent 32 are provided with a high impermeability (high gas-barrier properties) to gas. The freshness-keeping liquid impregnated in the adsorbent 32 is permitted to gradually disperse outside from front, rear, left and right side surfaces 32A of the adsorbent 32 through dispersing openings 37 which are described later.

Numeral 34 designates the film cover covering the adsorbent 32 from an outer side. The cover 34 comprises two films 35, 35 covering the adsorbent 32 from both upper and lower sides and bond areas 36 described later.

Here, each of the films 35 is, as shown in Fig. 7B, formed to be a thin rectangular sheet having larger dimensions than the adsorbent 32, having a multi-layer construction constituted by a resinous film 5 having high gas-barrier properties such as, for example, biaxially oriented polypropylene film (OPP film), and a layer 8 as the inner-most layer made of a non-woven fabric or a porous film and having a function of adsorbing and diffusing a liquid adhered to the surface in the same manner as the first embodiment. An outer peripheral side of the film 35 extends as a skirt portion 35A in a lateral direction of the adsorbent 32, and the skirt portion 35A has four corner portions 35B.

Even in this case, the extension dimension L of the skirt portion 35A is about 4-6 mm, for example, and is formed to have a dimension larger than that of the thickness T of the adsorbent 32 (L>T) as shown in Fig. 7A. With this, even when the edge of the skirt portion 35A is bent by the contact with the food or the like, the side surfaces 32 of the adsorbent 32 can be covered by the skirt portion 35A whereby it is possible to prevent certainly the side surfaces 32A of the adsorbent 32 from contacting directly the food or the like.

Further, the film 35 is formed to have a relatively thick dimension of about 30-70 µm for example, whereby a certain degree of rigidity is provided to the outer peripheral portion as the skirt portion 35A. Thus, for example, upper and lower skirt portions 35A, 35A are prevented, to a certain extent, from coming to contact with each other due to water drops or moisture at the positions of the dispersing openings 37 shown in Fig. 7A.

Numerals 36 designate the bond areas as thermally sealing portions located at each corner portion 35B of the films 35. Each of the bond areas 36 is formed to have a generally L-like shape by using means such as thermocompression bonding, and upper and lower corner portions 35b, 35B are bonded to each other as shown in Fig. 6. These bond areas 36 provide such structure that the adsorbent 32 is restricted between the upper and lower films 35, 35; the adsorbent 32 is held in a state incapable of drawing, and a dimension of openings is previously formed for the dispersing openings 37 which are described later.

Here, the bond areas 36 having a generally L-like shape are formed to have a drawing prevention allowance of a dimension L1 of about 4-6 mm for example. Further, a gap δ of about 1-3 mm is formed between the adsorbent 32 and each bond area 36 for example.

Numerals 37 designate the dispersing openings formed between the skirt portions 35A of the films 35. Each of the dispersing openings 37 is, as shown in Fig. 7A, formed between the skirt portions 35A which are extended in a lateral direction of the adsorbent 32 and are apart from each other in upper and lower directions so that front, rear, left and right side surfaces 32A of the adsorbent 32 are communicated with outer air.

Namely, each of the dispersing openings 37 is constituted by a corresponding non-bond area which is located between the bond areas 36 in Fig. 6 between the skirt portions 35A of the upper and lower films 35, 35. These dispersing openings 37 are formed to have the dimension of opening S (for example, 1.5-2.5 mm, preferably 1.8 mm or more) as shown in Figs. 7A and 8 whereby the freshness-keeping liquid impregnated in the adsorbent 32 is dispersed outside from each of the side surfaces 32A.

When the freshness-keeping liquid is dispersed through the skirt portion, the dispersed liquid is condensed inside of the skirt portion to be a liquid under some e.g. temperature conditions, which makes the upper and lower skirt portions contact to each other to prevent dispersion of the freshness-keeping liquid. However, the layer 8 having a function of adsorbing and diffusing the liquid, has a function of adsorbing and diffusing the liquid into the layer and preventing the upper and lower skirt portions from contacting to each other via the liquid. The layer 8 is provided on both or one of the upper and lower films 35 sandwiching the adsorbent.

Thus, even in this embodiment having such construction, substantially the same function and effect as in the first embodiment can be obtained. In particular, in this embodiment, the adsorbent 32 can be restricted in a state of being received between the upper and lower films 35, 35 by the bond areas 36 formed at each corner portions 35B of the films 35 whereby the direct contact of the adsorbent 32 to the food or the like can preferably be prevented.

Further, four dispersing openings 37 can be formed between the skirt portions 35A of the films 35, and the freshness-keeping liquid in the adsorbent 32 can gradually be dispersed outside through these dispersing openings 37. Then, such effect as in the second embodiment shown in Table 3 described hereinafter can be obtained. Further, the surface area of the dispersing openings 37 can be changed properly depending on the shape and the size of the bond areas. With this, the dispersing rate of the freshness-keeping liquid can correctly be adjusted.

In the third embodiment, description has been made as to the extension dimension L of the skirt portions 35A being larger than the thickness T of the adsorbent 32 (L>T). However, the present invention is not restricted to this but the extension dimension La of skirt portions 35A' may be formed to be equal to the thickness T of the adsorbent 32 (La=T) as in a first modification shown in Fig. 9, for example.

Further, as in a second modification shown in Fig. 10 for example, the extension dimension Lb of skirt portions 35A" may be formed to have a dimension smaller than that of the thickness T of the adsorbent 32 (Lb<T).

From now, the effect of the present invention will be specifically described with reference to the examples.

10 each pieces of freshness-keeping devices having the constructions of Tables 3 and 4, were prepared and dispersion amount of freshness-keeping liquid of each freshness-keeping device in relation to dispersion time, and its variation among 10 pieces were measured. The dispersion amount was measured by measuring weight change of a pulp.

Comparative Example 1 is a freshness-keeping device according to prior art using substantially the same technique described in Japanese Patent No. 3159691, and Examples 1 and 2 are freshness-keeping devices of the first embodiment of the present invention, which are formed by modifying the freshness-keeping devices of the Comparative Example 1. Comparative Example 2 is a freshness-keeping device according to prior art using substantially the same technique described in Japanese Patent No. 3159691, and Examples 3 and 4 are freshness-keeping devices of the third embodiment of the present invention, which are formed by modifying the freshness-keeping devices of Comparative Example 2.

**TABLE 3**

| | Example 1 | Example 2 | Comparative Example 1 |
|---|---|---|---|
| Film construction | | | |
| Upper side | OPP/CPP/non-woven fabric | OPP/CPP/non-woven fabric | OPP/CPP |
| Lower side | OPP/CPP/non-woven fabric | OPP/CPP | OPP/CPP |

Freshness-keeping device construction: Figs. 1, 2 and 3 Adsorbent(pulp)dimensions: 28 mm wide×42 mm long×2 mm thick
Freshness-keeping liquid: keeping liquid A(Table 1) 2g
Film dimensions: 41 mm widex54 mm long
OPP: 30 µm [manufactured by Gunze Packaging Systems]
CPP: 20 µm [manufactured by Gunze Packaging Systems]
Non-woven fabric: PP 15 g/m² [manufactured by MITSUI PETROCHEMICAL INDUSTRIES, Ltd.]

**TABLE 4**

| | Example 3 | Example 4 | Comparative Example 2 |
|---|---|---|---|
| Film construction | | | |
| Upper side | OPP/CPP/non-woven fabric | OPP/CPP/non-woven fabric | OPP/CPP |
| Lower side | OPP/CPP/non- woven fabric | OPP/CPP | OPP/CPP |

Freshness-keeping device construction: Figs. 6 and 7
Adsorbent(pulp)dimensions: 28 mm widex42 mm longx2 mm thick
Freshness-keeping liquid: keeping liquid A(Table 1) 2 g Film dimensions: 41 mm widex54 mm long
OPP: 30 µm (manufactured by Gunze Packaging Systems)
CPP: 20 µm (manufactured by Gunze Packaging Systems)
Non-woven fabric: PP 15 g/m² [manufactured by MITSUI PETROCHEMICAL INDUSTRIES, Ltd.]

Table 5 shows dispersion amounts of the freshness-keeping liquid by the above method and their variations among samples. From Table 5, it is understandable that in Examples 1 and 2 as compared with Comparative Example 1, average dispersion amounts are large and variation coefficients are small, which indicates that variation of dispersion amount is small, and less contact or substantially no contact is formed between upper and lower skirt portions.

In Examples 3 and 4 of Table 5 as compared with Comparative Example 2, average dispersion amounts are large and variation coefficients are small, which indicates that variation of dispersion amount is small among samples in the same manner as Examples 1 and 2, and less or substantially no contact between upper and lower skirt portions is present.

Further, there is no major difference between Examples 1 and 2 and between Examples 3 and 4, and thus it is understandable that construction provided with the non-woven fabric layer on one side and a construction provided with such a layer on both sides, provide substantially the same effects.

**TABLE 5**

| | Example 1 | | | Example 2 | | | Comparative Example 1 | | |
|---|---|---|---|---|---|---|---|---|---|
| Dispersion time | 2 | 5 | 24 | 2 | 5 | 24 | 2 | 5 | 24 |
| Average | 0.15 | 0.31 | 1.01 | 0.16 | 0.35 | 1.02 | 0.07 | 0.15 | 0.75 |
| Standard deviation | 0.05 | 0.09 | 0.08 | 0.21 | 0.04 | 0.04 | 0.02 | 0.06 | 0.21 |
| Variation coefficient | 0.30 | 0.28 | 0.08 | 1.31 | 0.11 | 0.04 | 0.30 | 0.37 | 0.28 |

| | Example 3 | | | Example 4 | | | Comparative Example 2 | | |
|---|---|---|---|---|---|---|---|---|---|
| Dispersion time | 2 | 5 | 24 | 2 | 5 | 24 | 2 | 5 | 24 |
| Average | 0.13 | 0.28 | 0.86 | 0.13 | 0.27 | 0.87 | 0.06 | 0.12 | 0.55 |
| Standard deviation | 0.04 0.07 | | 0.07 | 0.02 | 0.03 | 0.04 | 0.02 | 0.03 | 0.12 |
| Variation coefficient | 0.31 | 0.27 | 0.08 | 0.15 | 0.13 | 0.04 | 0.26 | 0.24 | 0.22 |

## Claims

1. A freshness-keeping device for keeping the freshness of food or other material to be preserved, which comprises an adsorbent adsorbed with a volatile freshness-keeping liquid and a film cover made of a material having a high impermeability to gas of the freshness-keeping liquid, which has larger dimensions than the adsorbent to cover the adsorbent from the outside, wherein the cover has a skirt portion extending in a lateral direction of the adsorbent and a dispersing opening is formed at the skirt portion to permit the freshness-keeping liquid to gradually disperse outwardly from the adsorbent, and the cover comprises a film having an outer periphery extending in a lateral direction of the adsorbent in a state of sandwiching the adsorbent from upper and lower faces, wherein both or one of the faces in contact with the adsorbent, of the film sandwiching the adsorbent from upper and lower faces, is provided with a layer having a function of adsorbing and diffusing a liquid adhered to the surface, so as to promote and stabilize dispersion rate of the freshness-keeping liquid dispersing outwardly.

2. The freshness-keeping device according to Claim 1, wherein in the adsorbent has a polygonal flat sheet-like shape; the film has a shape corresponding to the shape of the adsorbent in which a plurality of corner portions are formed in the skirt portions, and a plurality of bond portions are formed in the upper and lower skirt portions of the film for securing the adsorbent in the film by bonding only every corner portions of the skirt portions, and the dispersing opening is constituted by a non-bond portion present between the bond portions of the skirt portions of the film separating in upper and lower directions.

3. The freshness-keeping device according to Claim 1, wherein the layer having a function of adsorbing and diffusing a liquid adhered to the surface, is a layer having a plurality of air-cells or holes that are not independent from each other.

4. The freshness-keeping device according to Claim 1, wherein the layer having a function of adsorbing and diffusing a liquid adhered to the surface, comprises a non-woven fabric or a porous film.
